# EUROPEAN PATENT SPECIFICATION

(11) **EP 1 777 123 B1**
(45) Date of publication and mention of the grant of the patent: **26.08.2009**
(21) Application number: 06020391.6
(22) Date of filing: 28.09.2006
(51) Int. Cl.: B60R 21/217, B60R 21/233

(54) **Airbag system**
Airbagsystem
Système de coussin gonflable

(30) Priority: 25.10.2005 JP 2005309235; 24.10.2005 JP 2005308207; 02.11.2005 JP 2005319876
(43) Date of publication of application: 25.04.2007
(73) Proprietor: TAKATA CORPORATION, Minato-ku, Tokyo 106-8510 (JP)
(72) Inventor: Kashiwagi, Daisuke, Tokyo 106-8510 (JP)
(74) Representative: Banzer, Hans-Jörg

(56) References cited:
- EP-A2- 1 510 420
- JP-A- 11 115 673
- US-A1- 2002 190 509
- US-A1- 2005 110 244

## Description

The present invention relates to an airbag system mounted to a vehicle such as a car.

### [Background Art]

Various airbag systems are generally used for restraining occupants' bodies in a car collision, such as a driver airbag system that inflates and deploys from the rotation center of the steering wheel toward a driver side in a driver seat and a passenger airbag that inflates and deploys from an instrument panel toward a passenger seat side.

One of the airbag systems is a leg airbag system for preventing occupants' legs from colliding with an interior panel and the like in front of the seat and for restraining the vicinity of the knees to prevent the movement of the lower half of the occupants' bodies toward the front of the vehicle.

The leg airbag system generally includes an airbag disposed inside the interior panel (in the space on the back of the interior panel), a gas generator for inflating the airbag, and a lid that covers the airbag in a normal state (when the high-speed mobile body such as a car is not in a collision).

Such a leg airbag system is generally constructed such that the airbag is disposed in a folded state inside the interior panel, and the lid is mounted so as to cover the folded airbag. When a car and so on collides head-on, the gas generator generates a jet of gas. The gas is supplied to the airbag to open the lid with the inflation of the airbag. This permits the airbag to expand to the exterior of the interior panel to inflate and deploy between the interior panel and the lower legs of the occupant, thereby preventing the occupant's lower legs from striking against the interior panel (hereinafter, this type of airbag that inflates forward of occupant's legs is referred to as a knee airbag).

An example of the leg airbag system is one that includes a knee airbag manufactured in such a way that a sheet of fabric is folded back substantially at the center, a part of sawing portion remains unsewn, a rim part except the part is sewn into a bag shape, a gas generator is accommodated in the bag through the unsewn part, and the unsewn part is then sewn with the end of the gas generator adjacent to a connector projected from an insertion opening of the bag (refer to Japanese Unexamined Patent Application Publication No. 2003-40071 (p. 5, Fig. 5), for example).

US 2002/0190509 A1 relates to an airbag apparatus having a gas generating inflator for expanding and developing an airbag assembled in an inner portion from an insertion port, provided in a mounting base portion of the airbag. The inflator is received inside within the airbag through the insertion port. An internal contact fabric for clothing the insertion port of the inflator from an inner side is provided for preventing a gas leakage. An external contact fabric is provided for reinforcing the bag mounting base portion.

EP 1 510 420 A1 discloses an occupant protection system according to the preamble of claim 1, in which an airbag module can easily be mounted to a seat. The airbag has a slit in the lower surface for a gas generator and a retainer to insert. The airbag also has a cover cloth for covering the slit.

JP 11-115673 A discloses an airbag device wherein a bag is doubled up at its folding part and its peripheral part is sewn together as to be formed into a bag shape. A slit is provided for the folding part for inserting an inflator into the bag through the slit. A tongue part of a blocking cloth is closely wound up over the folding part from the outer side covering the slit.

US 2005/0110244 A1 discloses an inflatable fabric cushion that can maintain high internal pressure while having an exposed inflator squib. The inflatable cushion has a precision opening sized to be commensurate with a diameter of the inflator squib. The precision opening tightly circumscribes the inflator to limit leakage of inflation gas when the squib projects out of the opening.

### [Problems to be Solved by the Invention]

The prior art discloses the basic structure of a leg airbag system including a knee airbag and a gas generator passed through the insertion opening of the knee airbag.

The knee airbag requires further airtightness to improve the performance of the leg airbag system.

Accordingly, it is an object of the present invention to provide an airbag system in which the deployment performance of an airbag can be improved by improvement in airtightness.

### [Means for Solving the Problems]

According to the present invention, this object is achieved by an airbag system as defined in claim 1. The dependent claims define preferred and advantageous embodiments of the invention.

According to the present invention, an airbag system having an airbag and a gas generator is provided. The airbag system furthermore comprises a housing member communicating with the airbag for housing the gas generator and an insertion opening provided at the housing member so that the gas generator can be inserted through the insertion opening into the housing member. A protective fabric is disposed between the housing member and a rear panel of the airbag.

A first covering member is integrated with the housing member and is disposed on one side of the insertion opening to cover the insertion opening from the one side. The protective fabric has a second covering member which is disposed on the other side of the insertion opening to cover the insertion opening from the other side.

According to a preferred embodiment, the covering member is a fabric made of a material similar to that of the airbag.

According to this preferred embodiment, the covering member is made of a material similar to that of the airbag. This facilitates fixing the covering member to the airbag by sewing. Also, this enables the airbag to be folded together with the covering member and housed in the retainer, with the covering member disposed at the airbag.

Another preferred embodiment includes a retaining member for retaining the gas generator when the gas generator is housed in the airbag or the housing member. The retaining member is fixed to a retainer in such a manner that a fixing member secured to the retaining member is passed through openings provided on the airbag, the housing member, the covering member, and the retainer in a protruding condition, and tightened.

According to this preferred embodiment, when the gas generator is housed in the airbag or the housing member, the fixing member (e.g., a stud bolt) secured to a retaining member for retaining the gas generator is passed through bolt insertion openings of the airbag, the housing member, or the covering member, and the opening of the retainer, and tightened with for example, a nut to thereby fix the retaining member to the retainer. The fixing of the retaining member to the retainer enables the covering member that covers the insertion opening to be clamped between the retaining member and the retainer and to be pushed against the airbag or the housing member. This further improves the airtightness of the airbag.

### [Advantages of the Invention]

According to the invention, the deployment performance of an airbag can be improved by improvement in airtightness.

### [Brief Description of the Drawings]

Fig. 1 is a sectional view of the vicinity in front of a vehicle seat, showing the inflating state of a knee airbag of a leg airbag system according to an embodiment of the present invention.
Fig. 2 is a front view (plan view) of the knee airbag of the leg airbag system according to the embodiment, viewed from the interior panel.
Fig. 3 is a sectional view taken along line III-III of Fig. 2.
Fig. 4 is a cross-sectional view taken along line IV-IV of Fig. 3.

### [Best Mode for Carrying Out the Invention]

An embodiment of the present invention will be described hereinbelow with reference to the drawings. The embodiment is an example of application of the invention to a leg airbag system including an airbag (hereinafter, referred to as a knee airbag) that inflates forward of occupants' legs in a collision.

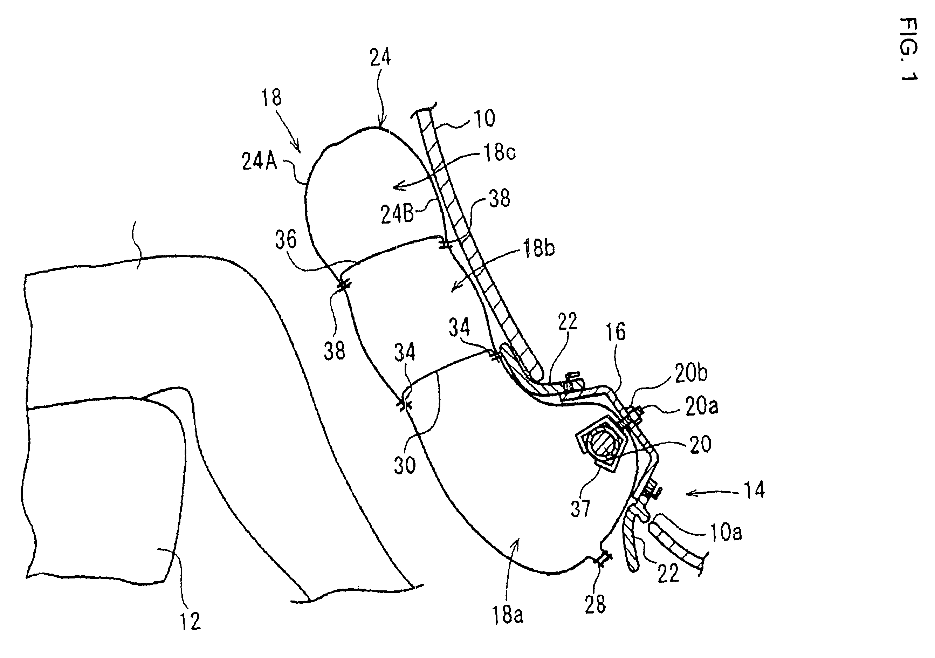

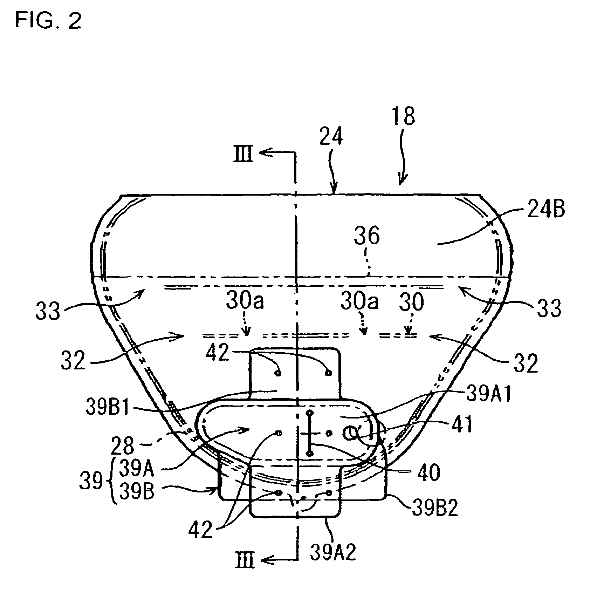

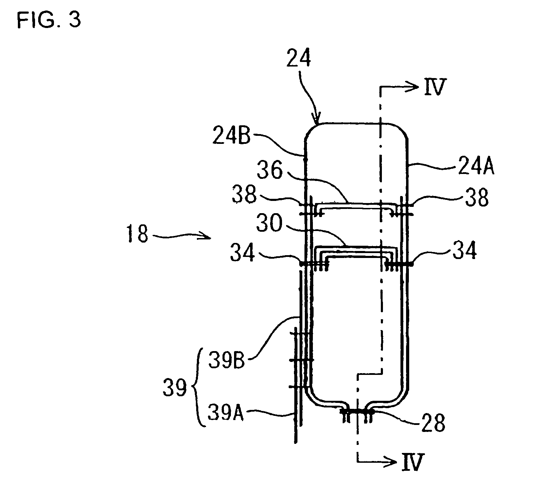

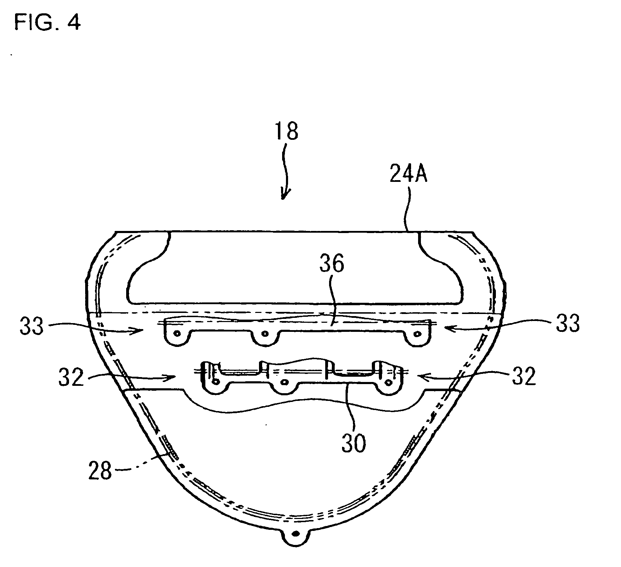

Fig. 1 is a sectional view of the vicinity in front of a vehicle seat, showing the inflating state of a knee airbag of a leg airbag system according to an embodiment of the present invention; Fig. 2 is a front view (plan view) of the knee airbag viewed from an interior panel; Fig. 3 is a sectional view taken along line III-III of Fig. 2; and Fig. 4 is a cross-sectional views taken along line IV-IV of Fig. 3.

A leg airbag system 14 is mounted to an interior panel 10 serving as an interior trim member in front of a seat 12.

The leg airbag system 14 (an airbag system) includes a container-like retainer 16, a knee airbag 18 (airbag) connected to the interior of the retainer 16, and a gas generator 20 for inflating the knee airbag 18. The retainer 16 is disposed in an opening 10a of the interior panel 10. The knee airbag 18 is usually accommodated in a folded state in the retainer 16. A lid 22 is mounted to the front surface of the retainer 16 such that it covers the knee airbag 18. The lid 22 is usually disposed substantially inside the interior panel 10; when the knee airbag 18 inflates, the lid 22 is open to the front of the interior panel 10 with the upper and lower ends as fulcrum.

In the embodiment, the opening 10a is provided at a height equal to or lower than the seating face of the seat 12. The knee airbag 18 inflates upward from below along the front surface of the interior panel 10 (the surface adjacent to the occupant) through the opening 10a at deployment of the airbag.

The outer shell of the knee airbag 18 is constructed of a sheet of panel 24 having an occupant-side front panel 24A and a rear panel 24B adjacent to the interior panel 10. Referring to Fig. 2, in this embodiment, the panel 24 is constructed such that the front panel 24A and the rear panel 24B substantially triangular in shape and of the same size are connected together. The panel 24 is folded back at the connecting portion, and respective rims of the front panel 24A and the rear panel 24B except the connecting portion are joined together all around with connecting means such as sewing, thereby formed into a bag. Reference numeral 28 indicates a seam of sewing thread or the like that stitches the rims. One surface of the front panel 24A and the rear panel 24B is coated with silicone, which comes inside in the form of a bag.

The knee airbag 18 has two band-like tethers 30 and 36 sewn therein for preventing an increase in the thickness of the airbag 18 during inflation and deployment. The first tether 30 is disposed upstream of the gas flow from the gas generator 20 (below in Figs. 1 to 4), whose crosswise opposite ends and the facing inner surfaces of the knee airbag 18 are stitched together with a sewing thread 38. The second tether 36 is disposed downstream of the gas flow (above in Figs. 1 to 4), whose crosswise opposite ends and the facing inner surfaces of the knee airbag 18 are also stitched with the sewing thread 38. As shown in Figs. 2 and 4, the first tether 30 and the second tether 36 are disposed substantially in the lateral direction (in the vehicle width direction) of the knee airbag 18 to form a first chamber 18a, a second chamber 18b, and a third chamber 18c in the knee airbag 18 in that order from the upper stream of the gas flow (see Fig. 1). Channels 32 and 33 for flowing the gas from the gas generator 20 are disposed on the opposite ends of the length of the first tether 30 and the second tether 36, respectively. The channel 32 communicates the first chamber 18a and the second chamber 18b with each other, while the channel 33 communicates the second chamber 18b and the third chamber 18c with each other. The first tether 30 has at least one (two in this embodiment) channel 30a for flowing the gas from the gas generator 20.

The knee airbag 18 has a gas-generator housing section 39 at the lower part. The gas-generator housing section 39 has a housing bag 39A for housing the gas generator 20 and a protective fabric 39B disposed between the housing bag 39A and the rear panel 24B, and is sewn to the knee airbag 18. The housing bag 39A communicates with the knee airbag 18, and has a housing section 39A 1 (housing member) for housing the gas generator 20 and a cover 39A2 integrated with the housing section 39A1 for the purpose of improving airtightness of the housing section 39A1 (in other words, to improve the airtightness of the knee airbag 18). The housing section 39A1 has a slit 40 (insertion opening) for the gas generator 20 to take in and out therethrough and an insertion opening 41 for the end of the gas generator 20 adjacent to the connector (not shown) to expose to the exterior after being housed. The cover 39A2 (a covering member, a first covering member) is disposed on one side of the slit 40 (below in Fig. 2), which is folded back from one side toward the slit 40 (upward in Fig. 2) to cover the slit 40 from one side. The insertion opening 41 can keep the airtightness of the knee airbag 18 when the end of the gas generator 20 is passed therethrough.

The protective fabric 39B has a cover 39B1 for increasing the airtightness of the knee airbag 18, like the cover 39A2 of the housing bag 39A, and a protective portion 39B2 for protecting the knee airbag 18 from the corner (edge) of the retainer 16 at inflation. The cover 39B1 (a covering member, a second covering member) is disposed on the other side of the slit 40 (above in Fig. 2), which is folded back from the other side toward the slit 40 (downward in Fig. 2) to cover the slit 40 from the other side.

In accommodating the gas generator 20 in this gas-generator housing section 39, the gas generator 20 is first accommodated in the housing section 39A1 of the housing bag 39A through the slit 40, then the cover 39B1 of the protective fabric 39B is folded back toward the slit 40 so as to cover the slit 40, and then the cover 39A2 of the housing bag 39A is folded back to the slit 40 so as to further cover the cover 39B1 that covers the slit 40. Thus, the slit 40 is covered double with the covers 39B1 and 39A2 being overlapped to each other to improve the airtightness of the knee airbag 18. The gas-generator housing section 39 is not shown in Fig. 1.

The gas generator 20 is housed in the housing section 39A1 of the housing bag 39A with the axis of cylinder substantially in the vehicle width direction in a state in which it is retained by a metallic gas-generator retaining member 37 (a retaining member, see Fig. 1). The gas generator 20 generates a jet of gas by the reaction of a gas generating agent using the heat of ignited powder. The ignition is controlled by a control unit (not shown) connected to the gas generator 20 via the connector and a cable (not shown). As shown in Fig. 1, stud bolts 20a (fixing members) project from the side circumferential surface of the gas-generator retaining member 37 that retains the generator 20. The stud bolts 20a are passed through bolt insertion openings 42 (openings) in the housing section 39A1 and the cover 39A2 of the housing bag 39A and the cover 39B1 of the protective fabric 39B and a bolt insertion opening (not shown) in the bottom of the retainer 16, on which nuts 20b are tightened to fix the gas generator 20 and the gas-generator retaining member 37 to the retainer 16. The rear panel 24B of the knee airbag 18 and the gas-generator housing section 39 (particularly, the covers 39A2 and 39B1) are retained to the retainer 16 in such a manner as to be clamped between the gas generator 20 and the gas-generator retaining member 37 and the bottom of the retainer 16.

Although not particularly described, the first tether 30, the second tether 36, and the gas-generator housing section 39 are made of the same material as that of the knee airbag 18 (or the panel 24).

The leg airbag system 14 in such a construction activates the gas generator 20 in a vehicle collision to generate gas for inflating knee airbag. The gas is supplied into the first chamber 18a to inflate the same first. At that time, the inflation of the first chamber 18a allows the lid 22 to open to both sides. Then, the gas in the first chamber 18a flows into the second chamber 18b through the channels 30a of the first tether 30 and the channels 32 to inflate the second chamber 18b. The gas in the second chamber 18b then flows into the third chamber 18c through the channels 33 to inflate the third chamber 18c. Thus, the knee airbag 18 is inflated and deployed.

The leg airbag system 14 of the embodiment with this construction and operation has the following advantages.

In the leg airbag system 14 of the embodiment, as described above, the gas generator 20 is housed in the housing section 39A1 of the housing bag 39A through the slit 40, and then the cover 39B1 of the protective fabric 39B is folded back to the slit 40 to cover the slit 40, and the cover 39A2 of the housing bag 39A is folded back to the slit 40 to further cover the cover 39B1 that covers the slit 40 double. In this way, the slit 40 of the housing section 39A 1 for housing the gas generator 20 is covered with the covers 39B1 and 39A2 to improve the airtightness of the knee airbag 18. This prevents gas from leaking through the slit 40 during inflation and deployment of the knee airbag 18, thereby improving the deployment performance of the knee airbag 18. Furthermore, since the knee airbag 18 can be deployed by the relatively low-output gas generator 20, the gas generator 20 can be made compact.

The leg airbag system 14 of the embodiment has the slit 40 as an insertion opening for the gas generator 20 to put in and out from the housing section 39A1. The slit-shaped insertion opening is expanded at the insertion of the gas generator 20 to provide sufficient opening to pass the gas generator 20 therethrough, and is closed after the insertion to minimize the opening space, thereby preventing a decrease in the tightness of the knee airbag 18.

In the leg airbag system 14 of the embodiment, as described above, the cover 39A2 is disposed on one side of the slit 40, and the cover 39B1 is disposed on the other side of the slit 40. After the gas generator 20 is housed in the housing section 39A1 through the slit 40, the slit 40 is covered with the cover 39B1 from the other side, and is then covered with the cover 39A2 from one side. The covering of the slit 40 with the covers 39A2 and 39B1 from both sides further increases the airtightness of the knee airbag 18.

This embodiment is constructed such that the slit 40 is covered double with the covers 39A2 and 39B 1 being overlapped to each other. This further increases the airtightness of the airbag.

As described above, the leg airbag system 14 of the embodiment is constructed such that the housing section 39A 1 and the cover 39A2 are integrated with each other and the cover 39B 1 and the protective portion 39B2 are integrated with each other. This construction can reduce the number of components and simplifies the manufacturing process in comparison with a case in which the components are manufactured separately.

The leg airbag system 14 of the embodiment is constructed such that the covers 39A2 and 39B 1 are made of the same material as that of the knee airbag 18, as described above. This facilitates fixing of the covers 39A2 and 39B1 to the knee airbag 18 by sewing. Also, this enables the knee airbag 18 to be folded together with the covers 39A2 and 39B1 and housed in the retainer 16, with the covers 39A2 and 39B1 fixed to the knee airbag 18.

The leg airbag system 14 of the embodiment has the separate gas-generator housing section 39 for housing the gas generator 20 in the knee airbag 18. This enables replacement of the gas generator 20 through the slit 40 even after the airbag is sewn, in contrast to the related art structure in which the airbag is manufactured in such a way that the gas generator is housed in the airbag and then the rim is sewn, so that the gas generator cannot be taken out after the bag is sewn up.

As described above, the leg airbag system 14 of the embodiment is constructed such that when the gas generator 20 and the gas-generator retaining member 37 is housed in the housing bag 39A, the stud bolts 20a secured to the gas-generator retaining member 37 are passed through bolt insertion openings (not shown) in the housing section 39A1 and the cover 39A2 of the housing bag 39A and the cover 39B 1 of the protective fabric 39B and the bolt insertion openings (not shown) in the bottom of the retainer 16, on which nuts 20b are tightened to fix the gas-generator retaining member 37 to the retainer 16. This fixing of the gas-generator retaining member 37 to the retainer 16 enables the covers 39A2 and 39B1 that cover the slit 40 to be clamped between the gas-generator retaining member 37 and the retainer 16 and to be pushed against the slit 40. This further improves the airtightness of the knee airbag 18.

While the invention has been described with the airbag 18 containing two tethers as an example, the invention is not limited to that. The invention may be applied to an airbag having more tethers and an airbag having no tether. This also offers the same advantages.

While the invention has been described using the example of application to the airbag system using the gas generator 20 that generates high-temperature gas using powder, the invention is not limited to that. The invention may be applied to an airbag system using a gas generator that generates high-pressure gas such as argon. This also offers the same advantages.

While the invention has been described using the example of application to the leg airbag system in which an airbag inflates forward of occupants' legs in a collision, the invention is not limited to that. The invention may be applied to various airbag systems for restraining occupants' bodies in a car collision, such as a driver airbag system that inflates and deploys from the rotation center of the steering wheel toward a driver in a driver seat and a passenger airbag that inflates and deploys from the instrument panel toward a passenger seat.

## Claims

1. An airbag system (14) including an airbag (18) for restraining an occupant and a gas generator (20) that generates a jet of gas to inflate the airbag (18), the airbag system (14) comprising:
a housing member (39A1) communicating with the airbag (18) for housing the gas generator (20);
an insertion opening (40) provided at the housing member (39A1), for the gas generator (20) to insert into the housing member (39A1) therethrough; and
a covering member (39A2, 39B1) that covers the insertion opening (40) from the exterior of the housing member (39A1),
**characterized in that**
a protective fabric (39B) is disposed between the housing member (39A1) and a rear panel (24B) of the airbag (18);
the covering member includes a first covering member (39A2) and a second covering member (39B1), whereby the first covering member (39A2) is integrated with the housing member (39A1) and is disposed on one side of the insertion opening (40) to cover the insertion opening (40) from the one side, while the protective fabric (39B) has the second covering member (39B1) which is disposed on the other side of the insertion opening (40) to cover the insertion opening (40) from the other side.

2. The airbag system (14) according to Claim 1, wherein the insertion opening (40) is a slit (40).

3. The airbag system (14) according to Claim 1 or Claim 2, wherein the covering member (39A2, 39B1) is a fabric made of a material equivalent to that of the airbag (18).

4. The airbag system (14) according to one of Claims 1 to 3, further comprising a retaining member (37) for retaining the gas generator (20) when the gas generator (20) is housed in the housing member (39A1, 39A, 39), the retaining member (37) being fixed to a retainer (16) in such a manner that a fixing member (20a) secured to the retaining member (37) is passed through openings (42) provided on the airbag (18), the housing member (39A1, 39A, 39), the covering member (39A2, 39B1), and the retainer (37) in a protruded condition, and tightened.

## Patentansprüche

1. Airbagsystem (14), welches einen Airbag (18) zum Zurückhalten eines Insassen und einen Gasgenerator (20), welcher einen Gasstrahl erzeugt, um den Airbag (18) aufzublasen, aufweist, wobei das Airbagsystem (14) umfasst:
ein Unterbringungselement (39A1) zum Unterbringen des Gasgenerators (20), welches mit dem Airbag (18) in Verbindung steht;
eine Einführungsöffnung (40), welche an dem Unterbringungselement (39A1) vorgesehen ist, um den Gasgenerator (20) in das Unterbringungselement (39A1) dadurch einzuführen; und
ein Abdeckelement (39A2, 39B1), welches die Einführungsöffnung (40) von der Außenseite des Unterbringungselements (39A1) bedeckt,
**dadurch gekennzeichnet,**
**dass** ein Schutzgewebe (39B) zwischen dem Unterbringungselement (39A1) und einer hinteren Stoffbahn (24B) des Airbags (18) angeordnet ist; und
**dass** das Abdeckelement ein erstes Abdeckelement (39A2) und ein zweites Abdeckelement (39B1) aufweist, wobei das erste Abdeckelement (39A2) mit dem Unterbringungselement (39A1) integriert ausgebildet ist und an einer Seite der Einführungsöffnung (40) angeordnet ist, um die Einführungsöffnung (40) von der einen Seite zu bedecken, während das Schutzgewebe (39B) das zweite Abdeckelement (39B1) aufweist, welches an der anderen Seite der Einführungsöffnung (40) angeordnet ist, um die Einführungsöffnung (40) von der anderen Seite zu bedecken.

2. Airbagsystem (14) nach Anspruch 1, wobei die Einführungsöffnung (40) ein Schlitz (40) ist.

3. Airbagsystem (14) nach Anspruch 1 oder Anspruch 2, wobei das Abdeckelement (39A2, 39B1) ein Gewebe ist, welches aus einem Material gefertigt ist, welches gleichwertig zu dem des Airbags (18) ist.

4. Airbagsystem (14) nach einem der Ansprüche 1-3, ferner umfassend ein Halteelement (37) zum Halten des Gasgenerators (20), wenn der Gasgenerator in dem Unterbringungselement (39A1, 39A, 39) untergebracht ist, wobei das Halteelement (37) an einem Halter (16) in einer derartigen Art und Weise befestigt ist, dass ein Befestigungselement (20a), welches an dem Halteelement (37) befestigt ist, durch Öffnungen (42), welche an dem Airbag (18), dem Unterbringungselement (39A1, 39A, 39), dem Abdeckelement (39A2, 39B1) und dem Halter (37) vorgesehen sind, in einem hervorstehenden Zustand verläuft und befestigt wird.

## Revendications

1. Système à coussin gonflable de sécurité (14), comprenant un coussin gonflable de sécurité (18), pour retenir un occupant, et un générateur de gaz (20), générant un jet de gaz, de manière à gonfler le coussin gonflable de sécurité (18), le système à coussin gonflable de sécurité (14) comprenant :
un organe formant boîtier (39A1), communiquant avec le coussin gonflable de sécurité (18) pour loger le générateur de gaz (20) ;
une ouverture d'insertion (40), prévue sur l'organe formant boîtier (39A1), pour y insérer le générateur de gaz (20) dans l'organe formant boîtier (39A1) en passant à travers elle ; et
un organe de recouvrement (39A2, 39B1), couvrant l'ouverture d'insertion (40) depuis l'extérieur de l'organe formant boîtier (39A1),
**caractérisé en ce que**
un tissu protecteur (39B) est disposé entre l'organe formant boîtier (39A1) et un panneau arrière (24B) du coussin gonflable de sécurité (18) ;
l'organe de recouvrement comprenant un premier organe de recouvrement (39A2) et un deuxième organe de recouvrement (39B1), de manière que le premier organe de recouvrement (39A2) soit intégré à l'organe formant boîtier (39A1) et soit disposé sur un côté de l'ouverture d'insertion (40), pour couvrir l'ouverture d'insertion (40) depuis le premier côté, tandis que le tissu protecteur (39B) comprend le deuxième organe de recouvrement (39B1), disposé sur l'autre côté de l'ouverture d'insertion (40), de manière à couvrir l'ouverture d'insertion (40) depuis l'autre côté.

2. Système à coussin gonflable de sécurité (14) selon la revendication 1, dans lequel l'ouverture d'insertion (40) est une fente (40).

3. Système à coussin gonflable de sécurité (14) selon la revendication 1 ou la revendication 2, dans lequel l'organe de recouvrement (39A2, 39B1) est un tissu fait d'un matériau équivalent à celui du coussin gonflable de sécurité (18).

4. Système à coussin gonflable de sécurité (14) selon l'une des revendications 1 à 3, comprenant en outre un organe de retenue (37), pour retenir le générateur de gaz (20) lorsque ce générateur de gaz (20) est logé dans l'organe formant boîtier (39A1, 39A, 39), l'organe de retenue (37) étant fixé à une pièce de retenue (16), de manière qu'un organe de fixation (20a), fixé à l'organe de retenue (37), soit passé par des ouvertures (42) prévues sur le coussin gonflable de sécurité (18), l'organe formant boîtier (39A1, 39A, 39), l'organe de recouvrement (39A2, 39B1), et la pièce de retenue (37) en un état en saillie, et serré.
